# EUROPÄISCHE PATENTSCHRIFT

(11) **EP 0 620 433 B1**
(45) Veröffentlichungstag und Bekanntmachung des Hinweises auf die Patenterteilung: **15.07.1998**
(21) Anmeldenummer: 94250089.3
(22) Anmeldetag: 06.04.1994
(51) Int. Cl.: G01N 27/49, G01N 27/416, G01N 27/406, G01N 27/407

(54) **Elektrochemischer Sensor**
Electrochemical sensor
Détecteur électrochimique

(30) Priorität: 14.04.1993 DE 4312124
(43) Veröffentlichungstag der Anmeldung: 19.10.1994
(73) Patentinhaber: Compur Monitors Sensor Technology GmbH, 81539 München (DE)
(72) Erfinder: Braden, Christoph, Dr., Dipl.-Phys., D-50937 Köln (DE); Deprez, Jacques, D-50226 Frechen (DE); Ohst, Holger, Dr. Dipl.-Chem., D-51519 Odenthal (DE); Pfenning, Dirk, Dr. Dipl.-Ing., D-51381 Leverkusen (DE); Hildenbrand, Karlheinz, Dr. Dipl.-Chem., D-47802 Krefeld (DE)
(74) Vertreter: Wagner, Karl H., Dipl.-Ing.

(56) Entgegenhaltungen:
- EP-A- 0 100 667
- WO-A-88/08975
- US-A- 4 259 165

## Beschreibung

Die Erfindung betrifft einen elektrochemischen Sensor, der aus mindestens zwei, mit einem flüssigen Meßzellenelektrolyt, in Verbindung stehenden Elektroden und einem wenigstens den Elektrolyt einschließenden Gehäuse besteht. Elektrochemische Sensoren werden vielfach als Gasspurenmeß- und Warngeräte eingesetzt. Als Elektrolyt werden häufig Festelektrolyte verwendet (siehe z.B. WO 91/16624). Es gibt aber auch eine Reihe von Gaskomponenten die nur mit elektrochemischen Sensoren auf der Basis von flüssigen bzw. dickflüssigen Meßzellenelektrolyten gemessen werden können.

Bei elektrochemischen Sensoren dieser Art füllt der Elektrolyt nicht den gesamten Innenraum im Sensorgehäuse aus, da zum Druckausgleich bei wechselnden externen Drücken in der Meßzelle ein leicht zu komprimierendes Restgasvolumen (Luftpolster) verbleiben muß. Mit fortschreitender Alterung der Meßzelle geht immer mehr Elektrolyt durch Abdampfen verloren, so daß das Restgasvolumen im Sensor mit fortschreitender Lebensdauer allmählich zunimmt. Dabei verteilt sich das Restgasvolumen je nach Lage des Sensors an unterschiedlichen Stellen in der Meßzelle. So kann z.B. der Fall eintreten, daß bei einem vertikal stehenden Sensor die oben angeordnete Arbeitselektrode durch das Restgasvolumen vollständig vom Elektrolyten getrennt wird und die Meßzelle nicht mehr funktioniert. Zu diesem Zweck wird in elektrochemischen Sensoren auf der Basis von flüssigen Elektrolyten von sogenannten Elektrolytbrücken Gebrauch gemacht durch die die Elektroden elektrisch miteinander verbunden werden. Technisch realisiert werden solche Elektrolytbrücken mit Hilfe von Filtermaterialien, die eine ausreichende Kapillarwirkung aufweisen, um den Elektrolyttransport durch die Kapillaren des Filtermaterials zu gewährleisten. Dabei besteht das Problem, daß die Elektrolytbrücken im Innern der Zelle so montiert werden müssen, daß in jeder Lage der Meßzelle ein möglichst großer Teil der Elektrolytbrücke in den Elektrolyt eintaucht. Die Benetzung der Elektroden durch mechanisches Anpressen der Elektrolytbrücken ist erfahrungsgemäß nur unvollkommen und vor allem schlecht reproduzierbar.

Hier setzt die Erfindung an. Es liegt die Aufgabe zugrunde, elektrochemische Sensoren auf der Basis von flüssigen Meßzellenelektrolyten mit der Zielsetzung weiterzuentwickeln, daß eine optimale Benetzung der Elektroden mit dem Elektrolyt in allen Anwendungsfällen unabhängig von der geometrischen Lage des Sensors sichergestellt ist, so daß die Sensorspezifikationen, insbesondere die Empfindlichkeit, vollkommen unabhängig von der jeweiligen geometrischen Lage des Sensors sind.

Diese Aufgabe wird erfindungsgemäß durch die Merkmale des Anspruches 1 gelöst.

Vorzugsweise wird der Elektrolytbrückensteg durch die hydrophile semipermeable Membrangebildet, wie dies in Anspruch 2 angegeben ist.

Die Beschichtung der Gehäuseinnenseite, sowie der Elektroden kann prinzipiell mit fertigen, kommerziell erhältlichen Membranen erfolgen. Vorzugsweise erfolgt die Beschichtung jedoch durch eine in situ-Membranherstellung nach der-sogenannten Phaseninversionsmethode. Die Grundlagen dieser Methode sind bekannt und beispielsweise in "Mikrofiltration mit Membranen", S. Ripperger, VCH 1992 beschrieben. Ausgehend von Polymerlösungen (Gießlösungen), die mit einem Naßauftrag im Bereich von 50 bis 500 µm auf ein Substrat gebracht werden, kann der Membranbildungsprozeß durch
a) Verdunsten eines Teils des Lösungsmittels oder einer Lösungsmittelkomponente,
b) Temperaturänderung oder durch
c) Zugabe einer weiteren Komponente (Fällungskoagulation, vorzugsweise mit Wasser)
erfolgen.

Ebenfalls bekannt sind die zur Membranherstellung eingesetzten Polymeren sowie deren Lösungsmittel, die zur Herstellung der Gießlösung dienen. Gängige Membranpolymere sind z.B. Zelluloseester, Polyamide, Polysulfone, Fluorpolymerisate, Polyacrylnitrile, Polyimide und Polyolefine. Weitere geeignete Membranpolymere sind z.B. Polyetherketone, Polysulfone mit cycloaliphatischen Diolkomponenten sowie Polyhydantoine (siehe DE 2 431 071), die sich neben ihrer pH-Beständigkeit im stark sauren Milieu durch eine relativ starke Hydrophilie auszeichnen. Polyhydantoinmembranen sind aus diesen Gründen für die erfindungsgemäßen membranbeschichteten elektrochemischen Elektroden besonders gut geeignet.

Bekannt sind auch Entwicklungen zur Herstellung von hydrophilisierten Membranen ausgehend von hydrophoben Polymeren, wie Polyvinylidenfluorid oder Polysulfon-bzw. Polyethersulfon, die sich durch besondere Chemikalien- und pH-Stabilität auszeichnen. Als Beispiele werden angegeben:
- Blends von Polyvinylidenfluorid oder Polysulfon mit Polyvinylpyrrolidon
- hydrophile Beschichtung der inneren Struktur, Aufpfropfen eines hydrophilen Molekülteils an das vorhandene Gerüstpolymer, z.B. durch Plasma- oder Coronabehandlung.

Besonders vorteilhaft sind Membranen mit hohen Feststoffanteilen. So konnten mit Membranschichten bestehend aus ca. 85 Teilen Titandioxid und 15 Teilen Polysulfon besonders vorteilhafte Ergebnisse erzielt werden. In Parallelbeispielen wurden anstelle von Polysulfon das hydrophilere Polyhydantoin (Bayer AG) eingesetzt. Die mit den entsprechenden TiO₂-haltigen Polyhydantoinmembranen beschichteten Sensoren zeigten ebenfalls hervorragende Testresultate und zeichneten sich durch eine sehr gute Benetzbarkeit mit der Elektrolytflüssigkeit aus. Neben Titandioxid, das zur Polymergießlösung zugesetzt wird, kommen weitere Füllstoffe wie z.B. Zinkoxid, Talkum, Bariumsulfat, Zeolithe, Bentonite, Calciumcarbonat, Kieselsäure, Aerosile (Fa. Degussa) oder mikrokristalline Zellulose in Frage. Diese Füllstoffe können entweder unbehandelt oder an der Oberfläche chemisch modifiziert, z.B. hydrophilisiert sein.

Mit der Erfindung werden folgende Vorteile erzielt: Aufgrund der Membranbeschichtung wird eine wesentlich höhere Funktionssicherheit erreicht. Die auf den Elektrodenoberflächen guthaftenden Membranschichten gewährleisten aufgrund ihrer Kapillarität und ihres hydrophilen Charakters stets eine gute Benetzung.

Der bisher häufig beobachtete Fehler, daß die Meßempfindlichkeit des Sensors und damit die Anzeige des Gerätes von der Lage und Stellung des Gerätes im Raum abhängt, konnte damit beseitigt werden.
- Bei der Ausführung des Sensors, bei der die Gehäuseinnenflächen mit einer semipermeablen Membran beschichtet sind, können die bisher üblichen gerätetechnisch diffizilen (schwierig zu montierenden!) Elektrolytbrücken entfallen. Im Vergleich dazu kann die Membranschicht mit geringem fertigungstechnischen Aufwand aufgebracht werden. Die hydrophile Membranschicht bewirkt eine vollständige und langzeitstabile Benetzung der Elektroden.
- Die Auskleidung der gesamten Gehäuseinnenfläche mit einer hydrophilen Membranschicht garantiert unabhängig von der Lage des Sensors eine permanente und stabile elektrochemische Verbindung der ebenfalls mit demselben Membranmaterial überzogenen Elektroden.
- Aufgrund der Membranbeschichtung werden auch Leckagen in der Gehäusewand des Sensors und damit ein Elektrolytaustritt vermieden. Solche Leckagen führten bei den bisher üblichen Meßzellen zu einem Totalausfall des Geräts, der häufig mit einer irreparablen Korrosion und Beschädigung der Meßelektronik zur Auswertung der Sensorsignale verbunden war.

Im folgenden werden Ausführungsbeispiele der Erfindung anhand von Zeichnungen näher erläutert. Es zeigen:
- Fig. 1: einen elektrochemischen Zweielektrodensensor mit einem die Elektroden verbindenden Elektrolytbrückensteg und
- Fig. 2: einen elektrochemischen Zweielektrodensensor, bei dem die Gehäuseinnenflächen mit einer Membranschicht versehen sind.

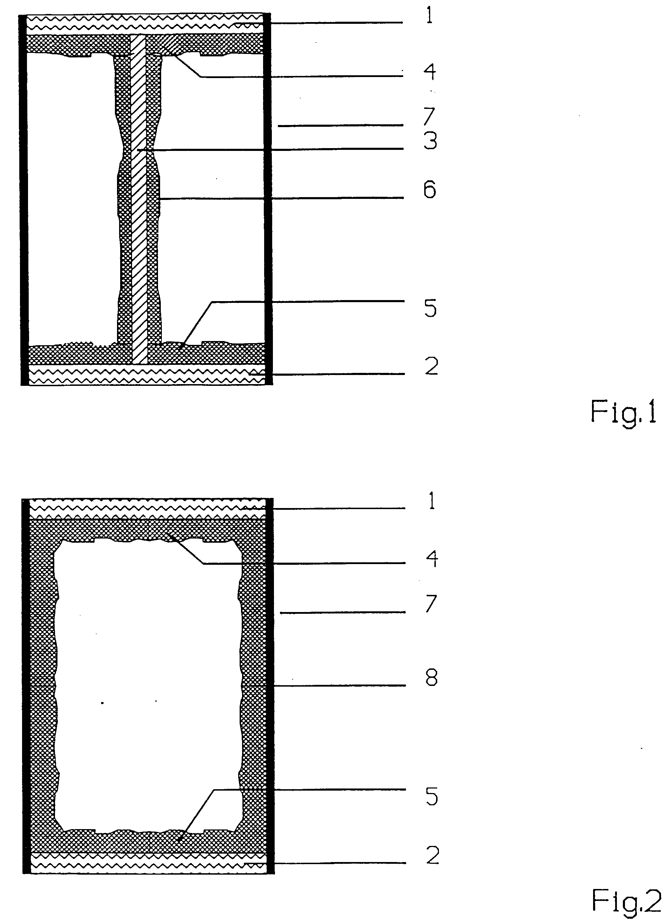

Der in Fig. 1 schematisch dargestellte elektrochemische Sensor besteht im wesentlichen aus der Arbeitselektrode 1, und der Gegenelektrode 2, die über den Elektrolytbrückensteg 3 miteinander elektrisch verbunden sind. Der Brückensteg 3 besteht aus einem saugfähigen Material, z.B. Filterpapier, das mit dem Meßzellenelektrolyt, z.B. H₂SO₄, getränkt ist. Die Innenseiten, d.h. die dem Elektrolyt zugewandten Oberflächen der Elektroden 1 und 2 sind mit ca. 500 um dicken Titandioxid-haltigen Membranschichten 4, 5 versehen. Ähnlich wie die rückseitigen Elektrodenflächen ist auch der Elektrolytbrückensteg 3 mit einer Titandioxid-haltigen Membran beschichtet (6). Die Membranbeschichtung erfolgt nach der erwähnten Phaseninversionsmethode, wobei die Varianten der selektiven Lösungsmittelverdampfung sowie die Fällungskoagulation in Wasser bevorzugt werden. Sämtliche Bauteile des Sensors sind in einem Gehäuse 7 untergebracht.

Der in Fig. 2 schematisch dargestellte elektrochemische Sensor ist hinsichtlich der Elektroden 1 und 2 genauso aufgebaut wie der Sensor nach Fig. 1. Im Unterschied zu dem vorbeschriebenen Sensor wird hier aber der Elektrolytbrückensteg durch einen auf die Innenseite des Gehäuses aufgebrachten Membranfilm 8 gebildet. Die Elektroden 1 und 2 sind analog zur Ausführung nach Fig. 1 ebenfalls mit einem Membranfilm 4, 5 überzogen. Der die gesamte Gehäuseinnenwand (Gehäuse 7) auskleidende Membranfilm 8 übernimmt also die Funktion des Elektrolytbrückensteges. Aufgrund der hervorragenden Benetzungseigenschaften des hydrophilisierten Membranfilms werden die Elektrodenoberflächen und die Gehäuseinnenwände vollständig mit Elektrolyt benetzt. Da alle Innenseiten der Meßzelle mit der hydrophilen Membran beschichtet sind, ist unabhängig von der geometrischen Lage der Meßzelle immer der Verbund mit dem Elektrolytreservoir sichergestellt. Der elektrochemische Kontakt zwischen den Elektroden über die leitfähige Beschichtung mit dem darin enthaltenen Elektrolyten kann daher niemals unterbrochen werden.

### Ausführungsbeispiel

Als Trägermembran diente eine Platin-Mohr-beschichtete poröse Teflonfolie.

### A. Herstellung der Polymergießlösung (TiO₂-haltige Polyhydantoinlösung)

89,7 g Polyhydantoin (Folienhydantoin, Bayer AG) wurden mit Hilfe eines Rührers in 40%iger 0 g N-Methylpyrrolidon (NMP) gelöst. Mit Hilfe eines schnelldrehenden Rührers wurden in diese Polymerlösung 508,3 g Titandioxid eindispergiert. Diese füllstoffhaltige Gießlösung wurde anschließend im Vakuum entgast.

### B. Membranbeschichtung

Die füllstoffhaltige Polymergießlösung gemäß A. wurde mit Hilfe eines Rakels mit einem Naßauftrag von 250 µm auf die Platin-Mohr-beschichtete Teflonfolie (Substrat) aufgetragen, in Wasser koaguliert und anschließend mit Frischwasser gewaschen und getrocknet.

## Patentansprüche

1. Elektrochemischer Sensor, bestehend aus mindestens zwei Elektroden, die mit einem flüssigen Meßzellenelektrolyt in Verbindung stehen und einem wenigstens den Elektrolyt einschließenden Gehäuse (7), wobei die dem Elektrolyt zugewandten Oberflächen der Elektroden (1, 2) und zumindest ein die Elektroden (1, 2) miteinander verbindender Elektrolytbrückensteg (3) mit einer hydrophilen semipermeablen Membran (4, 5, 6) beschichtet sind.

2. Elektrochemischer Sensor nach Anspruch 1, dadurch gekennzeichnet, daß der Elektrolytbrückensteg (3) durch die hydrophile semipermeable Membran in Form eines auf die Innenseite des Gehäuses (7) aufgebrachten hydrophilen Membranfilm (8) aus Polysulfon, Polyvinylidenfluorid, Polyamid oder Polyhydantoin gebildet wird.

3. Elektrochemischer Sensor nach Anspruch 1 bis 2, dadurch gekennzeichnet, daß die hydrophilen semipermeablen Membranschichten (4, 5, 6, 8) aus einem füllstoffhaltigen Membranmaterial bestehen, wobei der Gehalt an Füllstoff vorzugsweise höher ist als der Polymergehalt.

4. Elektrochemischer Sensor nach Anspruch 1 bis 3, dadurch gekennzeichnet, daß die hydrophile semipermeable Membranschicht aus 15 bis 25 Teilen Polysulfon und 85 bis 75 Teilen Titandioxid bzw. 15 bis 25 Teilen Polyhydantoin und 85 bis 75 Teilen Titandioxid besteht und daß die Membranschichtdicke 25 um bis 700 um, vorzugsweise 100 um bis 500 um beträgt.

## Claims

1. An electrochemical sensor comprising at least two electrodes that are in contact with a fluid measurement cell electrolyte and a housing (7) enclosing at least the electrolyte, wherein the surface of the electrodes (1, 2) facing the electrolyte and at least one crossbar (3) bridging the electrolyte and connecting the electrodes (1, 2) with one another is coated with a hydrophilic, semipermeable membrane (4, 5, 6).

2. The electrochemical sensor of claim 1 characterized in that the crossbar (3) bridging the electrolyte is formed by the hydrophilic, semipermeable membrane in the form of a hydrophilic membrane film (8) of polysulfone, polyvinylidene fluoride, polyamide or polyhydantoine applied to the inner side of the housing (7).

3. The electrochemical sensor of claim 1 or 2 characterized in that the hydrophilic, semipermeable membrane layers (4, 5, 6, 8) comprise a membrane material containing filler, wherein the content of filler is preferably higher than the polymer content.

4. The electrochemical sensor of claims 1 to 3 characterized in that the hydrophilic, semipermeable membrane layer comprises 15 to 25 parts polysulfone and 85 to 75 parts titanium dioxide and/or 15 to 25 parts polyhydantoine and 85 to 75 parts titanium dioxide and that the thickness of the membrane layer is 25 µm to 100 µm, preferably 100 µm to 500 µm.

## Revendications

1. Capteur électrochimique constitué d'au moins deux électrodes qui sont en liaison avec un électrolyte liquide de cellule de mesure et d'un boîtier (7) renfermant au moins l'électrolyte, les faces des électrodes (1, 2) tournées du côté de l'électrolyte et au moins un pont d'électrolyte (3) reliant les électrodes (1, 2) l'une à l'autre étant revêtus d'une membrane hydrophile semi-perméable (4, 5, 6).

2. Capteur électrochimique selon la revendication 1, caractérisé en ce que le pont d'électrolyte (3) est constitué de la membrane hydrophile semi-perméable sous la forme d'un film de membrane (8) rapporté à l'intérieur du boîtier (7), en polysulfone, fluorure de polyvinylidène, polyamide ou polyhydantoïne.

3. Capteur électrochimique selon la revendication 1 ou 2, caractérisé en ce que les couches de membrane hydrophile semi-perméable (4, 5, 6, 8) sont constituées d'un matériau de membrane contenant une charge, la proportion de charge étant de préférence supérieure à la proportion de polymère.

4. Capteur électrochimique selon l'une des revendications 1 à 3, caractérisé en ce que la couche de membrane hydrophile semi-perméable est constituée de 15 à 25 parts de polysulfone et de 85 à 75 parts de dioxyde de titane ou de 15 à 25 parts de polyhydantoïne et de 85 à 75 parts de dioxyde de titane et en ce que l'épaisseur de la couche de membrane est comprise entre 25 et 700 µm, de préférence entre 100 et 500 µm.
